# EUROPÄISCHE PATENTSCHRIFT

(11) **EP 3 511 561 B1**
(45) Veröffentlichungstag und Bekanntmachung des Hinweises auf die Patenterteilung: **29.07.2020**
(21) Anmeldenummer: 18151383.9
(22) Anmeldetag: 12.01.2018
(51) Int. Cl.: F03D 1/06

(54) **ROTORBLATT FÜR EINE WINDENERGIEANLAGE, WINDENERGIEANLAGE SOWIE HALTERUNG**
WIND TURBINE, HOLDER AND ROTOR BLADE FOR A WIND TURBINE
PALE DE ROTOR POUR UNE ÉOLIENNE, ÉOLIENNE AINSI QUE SUPPORT

(43) Veröffentlichungstag der Anmeldung: 17.07.2019
(73) Patentinhaber: Nordex Energy GmbH, 22419 Hamburg (DE)
(72) Erfinder: Baars, Peter, 23974 Krusenhagen (DE); Neßlinger, Sebastian, 20357 Hamburg (DE); Block, Tim Berend, 24558 Henstedt-Ulzburg (DE)
(74) Vertreter: Epping - Hermann - Fischer

(56) Entgegenhaltungen:
- WO-A1-2017/121753
- US-A1- 2007 119 185
- US-A1- 2012 141 284
- US-A1- 2017 314 536
- Nisheeth Srivastava: "Mounting Bracket", , 28. Juni 2014 (2014-06-28), XP002783094, Gefunden im Internet: URL:https://www.youtube.com/watch?v=61ePVl jEDAg [gefunden am 2018-07-16]

## Beschreibung

Die Erfindung betrifft ein Rotorblatt für eine Windenergieanlage, welches einen Rotorblattwurzelbereich und eine innerhalb des Rotorblattwurzelbereichs angeordnete Bodenplatte aufweist. Die Erfindung betrifft auch eine Windenergieanlage mit zumindest einem solchen Rotorblatt.

Windenergieanlagen mit Rotorblättern sind aus dem Stand der Technik vielfach bekannt und werden verwendet, um Windenergie in elektrische Energie umzuwandeln. Im Bereich einer Rotorblattwurzel sind Rotorblätter typischerweise mit einer Bodenplatte, die auch als Schott, Schottwand oder Trennwand bezeichnet werden kann, ausgestattet. Diese ist typischerweise innerhalb des Rotorblattes im Rotorblattwurzelbereich montiert. Eine derartige Bodenplatte hat im Allgemeinen zwei Funktionen. Zum einen dient die Bodenplatte als Arbeitsplattform für Arbeiter, wenn Wartungs- oder Reparaturarbeiten innerhalb eines Rotorblatts vorgenommen werden müssen. Zum anderen dient eine solche Bodenplatte dem Schutz vor herumfliegenden Teilen, etwa Abfällen, die beispielsweise aus dem Rotorblatt in die Nabe der Windenergieanlage fallen können. Ein derartiges Rotorblatt ist beispielsweise aus der internationalen Anmeldung WO 2012/119934 A1 bekannt.

US 2017/314536 A1 betrifft eine Heizvorrichtung für ein Windenergieanlagenblatt, die aus einem Luftheizsystem und einem elektrischen Heizsystem besteht. Das Luftheizsystem und das elektrische Heizsystem sind beide innerhalb des Windenergieanlagenblatts angeordnet, wobei das Luftheizsystem einen Luftheizsteuerschrank und eine Luftheizvorrichtung umfasst und das elektrische Heizsystem einen elektrischen Heizsteuerschrank und eine elektrische Heizung umfasst.

Eine Aufgabe, die der Erfindung zugrunde liegt, ist es, ein Montagekonzept anzugeben, welches zu einer verlässlichen Befestigung von Objekten an der Bodenplatte beiträgt.

Es wird ein Rotorblatt für eine Windenergieanlage offenbart. Das Rotorblatt hat einen Rotorblattwurzelbereich und eine Bodenplatte, die fest innerhalb des Rotorblattwurzelbereichs mit einer Innenwand des Rotorblatts verbunden ist. Das Rotorblatt hat einen Schaltschrank, der mehrere erste Befestigungspunkte hat. Weiter ist eine Halterung vorgesehen, die einen oder mehrere zweite Befestigungspunkte aufweist, an denen die Halterung direkt an der Bodenplatte festgelegt ist. An der Halterung ist der Schaltschrank mittels der ersten Befestigungspunkte direkt befestigt. Dabei liegen der oder die zweiten Befestigungspunkte der Halterung - projiziert in eine durch die ersten Befestigungspunkte aufgespannte Ebene - innerhalb eines durch die ersten Befestigungspunkte gebildeten ersten Vielecks.

Eine Windenergieanlage und damit deren Rotorblätter sind im Betrieb typischerweise hohen Kräften aufgrund von wirkenden Windlasten ausgesetzt. Diese Kräfte können dazu führen, dass sich die Rotorblätter verformen bzw. deformieren, insbesondere elastisch. Aufgrund der Tatsache, dass die Bodenplatte fest in dem Rotorblattwurzelbereich mit einer Innenwand des Rotorblatts verbunden ist, setzen sich die Kräfte auf die Bodenplatte fort, die daraufhin ebenfalls deformiert werden kann, beispielsweise ovalisiert. Infolgedessen können hohe Scherkräfte auf Anbindungen, etwa Bolzenverschraubungen, und auf den typischerweise starren und steifen Schaltschrank wirken, wenn dieser direkt und unmittelbar mit der Bodenplatte selbst verbunden ist.

Bei dem beschriebenen Rotorblatt ist eine Entkopplung der direkten Befestigung des Schaltschranks mit der Bodenplatte vorgesehen. Mit anderen Worten wird die Halterung als Entkopplungselement zwischen Schaltschrank und Bodenplatte montiert. Dadurch sind die Befestigungspunkte der Bodenplattenbefestigung strukturell von denen der Schaltschrankbefestigung entkoppelt. Dadurch, dass der oder die zweiten Befestigungspunkte der Halterung innerhalb des ersten Vielecks liegen, gibt es im Falle von einem zweiten Befestigungspunkt gar keine oder im Falle von zumindest zwei zweiten Befestigungspunkten nur geringe Relativbewegungen zwischen den zweiten Befestigungspunkten. Relativbewegungen zwischen den ersten Befestigungspunkten des Schaltschranks werden nahezu gänzlich vermieden, da die Verformungen und Bewegungen der Bodenplatte nicht mehr direkt auf den Schaltschrank einwirken können. Andernfalls würden insbesondere sehr hohe Scherkräfte auf die Befestigungspunkte einwirken.

Weiterhin ermöglicht das Rotorblatt die Integration oder das Vorsehen von Dämpfungsmaßnahmen, beispielsweise bei der Anbindung der Halterung an die Bodenplatte oder beim Ausgestalten der Halterung selbst. Dadurch wird weiter zu den vorgenannten Vorteilen und Funktionen beigetragen. Dadurch wird zur Vermeidung oder Reduktion von Schwingungen, die bei der Verformung oder Bewegung der Bodenplatte auftreten, beigetragen.

Ein weiterer Vorteil bei dem beschriebenen Rotorblatt besteht darin, dass unterschiedliche Schaltschrankgrößen bei identischer Befestigung einer Halterung an der Bodenplatte möglich sind. Dadurch wird eine Modularität beziehungsweise Flexibilität erhöht beziehungsweise ermöglicht.

Hier und im Folgenden gilt, dass der Begriff Befestigungspunkt je nach Kontext einen Punkt einer einzelnen Komponente als auch einen Punkt, in welchem zwei Komponenten miteinander verbunden sind, beschreibt. Als Synonyme gelten die Begriffe Anbindungspunkt oder Montagepunkt.

Der Rotorblattwurzelbereich ist typischerweise wie das gesamte Rotorblatt im Inneren hohl ausgebildet, wobei in dem Rotorblattwurzelbereich des Rotorblatts die Bodenplatte fest und steif mit der Innenwand verbunden beziehungsweise an der Innenwand festgelegt oder verankert ist. Im Querschnitt ist der Rotorblattwurzelbereich im Unterschied zu dem restlichen Teil des Rotorblattes typischerweise kreisrund oder im Wesentlichen kreisförmig ausgebildet. Der Rotorblattwurzelbereich ist einer Rotornabe zugeordnet und im montierten Zustand der Rotornabe zugewandt. Die Bodenplatte ist beispielsweise an mehreren Stellen eines Rands der Bodenplatte mit der Innenwand fest gekoppelt. Die Kopplung kann beispielsweise durch Verklebungen, Verschraubungen oder mittels steifer Verbindungsadapter ausgeführt sein.

Bei der Halterung handelt es sich beispielsweise um eine Konsole oder ein Tragwerk mit Tragarmen, etwa wie weiter unten beschrieben. Die Halterung ist beispielsweise als Blechumformteil ausgebildet. Die Halterung hat einen vergleichsweise geringen Herstell- und Kostenaufwand.

Bei dem Schaltschrank handelt es sich um ein strukturell steifes oder starres Element, wobei im Inneren typischerweise elektrische Komponenten und Kabel angeordnet sind.

Gemäß einer Ausführungsform weist die Halterung zumindest zwei zweite Befestigungspunkte auf, wobei ein geringster Abstand benachbarter Ecken des ersten Vielecks größer ist als ein geringster zweiter Abstand zwischen den beiden zweiten Befestigungspunkten. Dadurch wird zu dem obigen Vorteil und Funktionen beigetragen. Insbesondere aufgrund des deutlich geringeren zweiten Abstands, der beispielsweise 20 cm betragen kann, und beispielsweise 50, 60, 70 oder 80 % geringer als der erste Abstand benachbarter erster Befestigungspunkte ist, sind Relativbewegungen zwischen den zweiten Befestigungspunkten verhältnismäßig gering, sodass auch bei einer Deformation der Bodenplatte keine negativen Auswirkungen auf die Anbindung der Halterung an die Bodenplatte zu erwarten sind. Durch die Ausbildung mehrerer zweiter Befestigungspunkte wird allgemein die mechanische Kopplung mit der Bodenplatte verbessert, wobei insb. Momentkräfte in den einzelnen Befestigungspunkten reduziert werden.

Gemäß einer Ausführungsform weist die Halterung drei oder mehr zweite Befestigungspunkte auf, die ein zweites Vieleck definieren, wobei eine Fläche des ersten Vielecks um mindestens 50 %, bevorzugt 60 %, besonders bevorzugt 70 % oder 80%, größer ist als eine Fläche des zweiten Vielecks.

Analog zu oben spiegelt sich in den Flächenverhältnissen ein deutlich geringerer Abstand zwischen den zweiten Befestigungspunkten des zweiten Vielecks im montierten Zustand wieder, wodurch es zu deutlich geringeren Relativbewegungen untereinander kommt.

Die zuvor beschriebenen Ausführungsformen sind alternativ auch vorstellbar, ohne dass der oder die zweiten Befestigungspunkte innerhalb des ersten Vielecks liegen. Auch derartige Ausgestaltungen ermöglichen im Wesentlichen die eingangs genannten Vorteile und Funktionen, wenn zumindest eine der beschriebenen Abstands- bzw. Flächendefinitionen gemäß der beiden zuvor erwähnten Ausführungsformen erfüllt ist.

Gemäß einer weiteren Ausführungsform ist die Halterung als Tragwerk ausgebildet und weist eine Grundplatte mit dem einen oder den mehreren zweiten Befestigungspunkten auf. Von der Grundplatte erstrecken sich ein oder mehrere Tragarme, an denen der Schaltschrank jeweils über einen ersten Befestigungspunkt befestigt ist.

Gemäß einer Ausführungsform ist die Halterung als Konsole ausgebildet. Die Konsole hat beispielsweise eine Grundplatte mit dem einen oder den mehreren zweiten Befestigungspunkten. An sich gegenüberliegenden Rändern der Grundplatte erstreckt sich von der Grundplatte jeweils ein Flügel, an dem der Schaltschrank jeweils über einen oder mehrere erste Befestigungspunkte befestigt ist.

Gemäß einer Ausführungsform ist der Schaltschrank in den ersten Befestigungspunkten mit der Halterung und/oder die Halterung in den zweiten Befestigungspunkten mit der Bodenplatte verschweißt und/oder verschraubt. Somit wird die Halterung, etwa das Tragwerk oder die Konsole, als Schweißbaugruppe und/oder Verschraubungsbaugruppe gefügt.

Gemäß einer Ausführungsform ist die Halterung zumindest teilweise federnd ausgebildet. Beispielsweise sind die Flügel oder die Tragarme federnd ausgebildet. Beispielsweise erstrecken sich die Tragarme oder Flügel unter einem kleinen Winkel von der Grundplatte, sodass eine Federwirkung erzielt ist. Ein derartiger Effekt kann beispielsweise verstärkt oder erreicht werden, wenn die Halterung als ein Blechumformteil, beispielsweise aus Federstahl, gefertigt ist. Durch die federnde Ausbildung wird zur Kompensation von Fertigungstoleranzen sowie zum Erreichen von Dämpfungseigenschaften beigetragen.

Gemäß einer Ausführungsform weist die Halterung ein oder mehrere Dämpfungselemente auf. Beispielsweise weisen die Tragarme, die auch als Tragwerkausleger bezeichnet werden können, dämpfende Eigenschaften auf oder weisen integrale Dämpfungselemente als Bestandteile auf. Beispielsweise sind nur die Tragarme oder Flügel dämpfend ausgebildet und/oder federnd ausgebildet bezüglich der Grundplatte.

Gemäß einer Ausführungsform ist zwischen dem Schaltschrank und der Bodenplatte zumindest im Bereich der ersten Befestigungspunkte ein Freiraum oder Spalt ausgebildet. Mit anderen Worten ist keine direkte Verbindung zwischen der Bodenplatte und dem Schaltschrank vorgesehen. Dadurch, dass ein Freiraum oder Spalt zumindest in den Bereichen der ersten Befestigungspunkte ausgebildet ist, wird dazu beigetragen, dass sich die Bodenplatte relativ zu dem Schaltschrank bewegen beziehungsweise deformieren kann.

Des Weiteren wird eine Windenergieanlage offenbart, die einen Rotor mit einem oder mehreren Rotorblättern nach einer der vorbeschriebenen Ausführungsformen aufweist.

Des Weiteren wird eine Halterung offenbart, die entsprechend ausgebildet ist, einen Schaltschrank an einer Bodenplatte des Rotorblatts zu fixieren.

Die Windenergieanlage und die Halterung ermöglichen im Wesentlichen die vorgenannten Vorteile und Funktionen.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage,
Figur 3 eine schematische Darstellung eines Schaltschranks für die Windenergieanalage,
Figur 4 eine schematische Darstellung einer Halterung für den Schaltschrank,
Figur 5 eine schematische Schnittansicht der Halterung und des Schaltschranks in einem montierten Zustand,
Figur 6 eine schematische Aufsicht des montierten Zustands und
Figur 7 eine Halterung gemäß einem zweiten Ausführungsbeispiel.

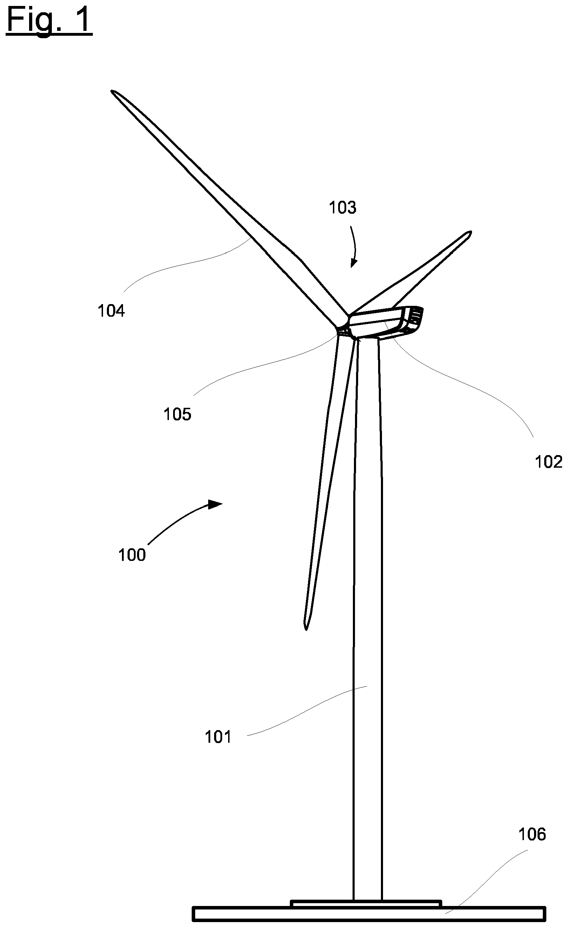

Figur 1 zeigt eine schematische Darstellung einer Windenergieanlage 100 gemäß einem Ausführungsbeispiel. Die Windenergieanlage 100 weist einen Turm 101 auf. Der Turm 101 ist mittels eines Fundaments auf einem Untergrund befestigt. An einem dem Untergrund gegenüberliegenden Ende des Turms 101 ist eine Gondel 102 drehbar gelagert. Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind.

Der Rotor 103 wird im Betrieb durch eine Luftströmung, beispielsweise Wind, der entlang einer Hauptströmungsrichtung 124 einströmt, in Rotation versetzt. Diese Rotationsbewegung wird über die Rotorwelle und gegebenenfalls ein Getriebe zu dem Generator übertragen. Der Generator wandelt die kinetische Energie des Rotors 103 in elektrische Energie um.

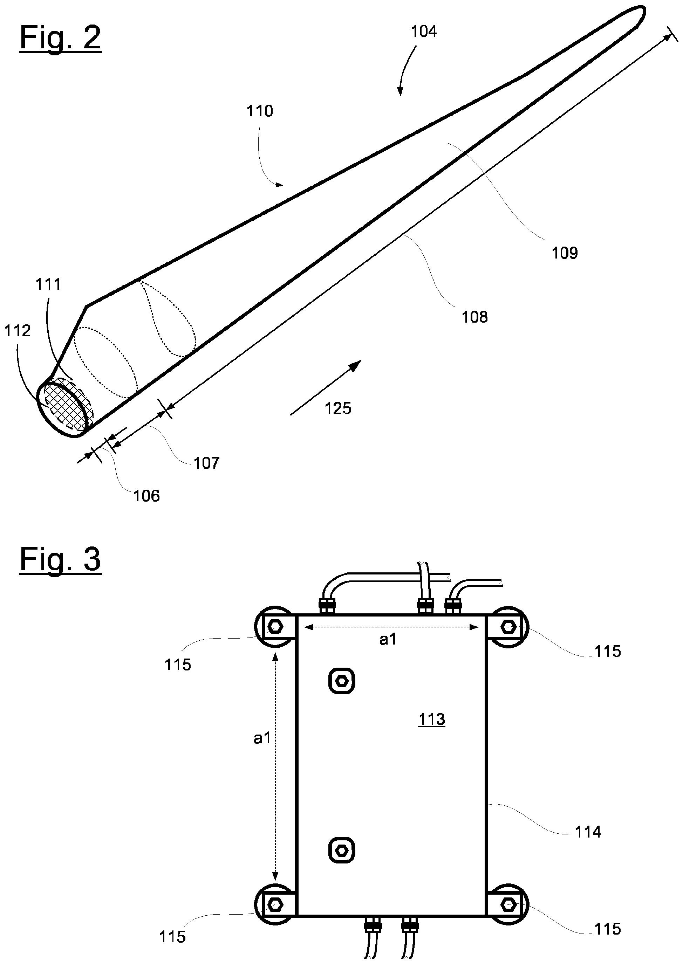

Figur 2 zeigt ein exemplarisches Rotorblatt 104 der Windenergieanlage 100. Das Rotorblatt 104 hat die Form eines herkömmlichen Rotorblattes und hat einen Rotorblattwurzelbereich 106, der der Rotornabe 105 zugewandt und zugeordnet ist. Der Rotorblattwurzelbereich 106 hat typischerweise einen im Wesentlichen kreisrunden Querschnitt. An den Rotorblattwurzelbereich 106 schließen sich ein Übergangsbereich 107 und ein Profilbereich 108 des Rotorblatts 104 an. Das Rotorblatt 104 hat bezüglich der Längserstreckungsrichtung 125 eine Druckseite 109 und eine gegenüberliegende Saugseite 110. Das Rotorblatt 104 ist im Inneren im Wesentlichen hohl ausgebildet.

Innerhalb des Rotorblattwurzelbereichs 106 ist eine Bodenplatte 111 angeordnet, die fest mit einer Innenwand 112 des Rotorblatts 104 im Rotorblattwurzelbereich 106 verbunden ist. Mit anderen Worten ist zwischen der Schale des Rotorblatts 104 und der Bodenplatte 111 eine steife Verbindung vorgesehen. Die Bodenplatte 111 ist im Ausführungsbeispiel kreisförmig ausgebildet und kann optional über ein oder mehrere Durchsteigeöffnungen verfügen, durch die Personen hindurchtreten können, um Zugang zum Inneren des Rotorblatts 104 zu erhalten. Durch die Bodenplatte 111 wird beispielsweise ein Hineinfallen von Gegenständen oder von Personen aus der Rotornabe 105 in das Rotorblatt 104 und umgekehrt verhindert. Zusätzlich oder alternativ fungiert die Bodenplatte 111 als Abdichtung gegenüber Schmutz und/oder Feuchtigkeit. Zudem dient die Bodenplatte 111 optional als entsprechende Arbeitsplattform bei Wartungs- oder Montagearbeiten an der Rotornabe 105 oder dem Rotorblatt 104 selbst.

Aufgrund der verhältnismäßig großen, ungenutzten Fläche der Bodenplatte 111 ist angedacht, beispielsweise einen in Figur 3 gezeigten Schaltschrank 113 an die Bodenplatte zu montieren. Bei dem Schaltschrank 113 handelt es sich um eine Komponente oder einen Körper, welcher im Wesentlichen steif und starr ausgebildet ist. Insbesondere hat der Schaltschrank 113 ein steifes Gehäuse. Im Inneren des Gehäuses können Verdrahtungen, Verkabelungen, Verschaltungen oder andere elektrische und mechanische Bauteile angeordnet sein, was jedoch für die Idee der eingangs beschriebenen Erfindung unwesentlich ist.

In Figur 3 ist eine Aufsicht auf den Schaltschrank 113 gezeigt. Außen an einem Gehäuse 114 weist der Schaltschrank in den Eckbereichen vier erste Befestigungspunkte 115 auf. Die ersten Befestigungspunkte 115 definieren ein erstes Vieleck, in diesem Fall mit vier Ecken, wobei benachbarte Ecken beziehungsweise Befestigungspunkte 115 erste Abstände a1 zueinander haben. Bei den Abständen handelt es sich beispielsweise um 460 mm bzw. 560 mm.

Mittels der Befestigungspunkte 115 kann der Schaltschrank 113 an die Bodenplatte 111 montiert werden, wobei hierfür beispielsweise Montageadapter (nicht dargestellt) eingesetzt werden können. Mit Hilfe dieser Montageadapter wird der relativ starre Schaltschrank 113 direkt an der in der Regel weicheren und deformierbaren Bodenplatte 111 verschraubt. Die Montageadapter beruhen auf einer beidseitigen Verklebung auf der Bodenplattenoberfläche, kombiniert mit einer Bolzenverschraubung beziehungsweise Klemmung durch die Bodenplatte. Bei einer derartigen direkten Befestigung des Schaltschranks 113 an der Bodenplatte 111 können die eingangs genannten Verformungen und Biegungen der Bodenplatte 111 während eines Betriebes der Windenergieanlage 100 im schlimmsten Fall dazu führen, dass die Anbindung an die Bodenplatte 111 unter den wirkenden Scherkräften bricht und sich der Schaltschrank 113 von der Bodenplatte 111 löst.

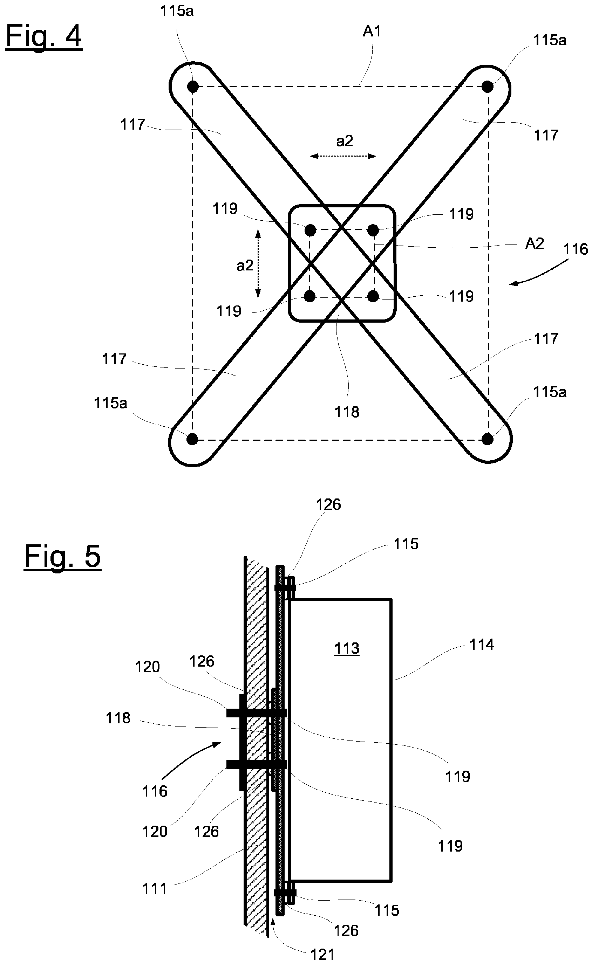

Figuren 4 bis 6 beschreiben eine alternative, verbesserte Anbringung eines Schaltschranks 113 an die Bodenplatte 111 entsprechend der Erfindung.

Figur 4 zeigt eine Halterung 116, die im Ausführungsbeispiel als Tragwerk mit Tragarmen 117 ausgebildet ist. Die Halterung 116, die beispielsweise als Blechumformteil ausgeführt ist, hat eine zentrale Grundplatte 118, die vier zweite Befestigungspunkte 119 aufweist, über die die Halterung 116, wie im Querschnitt in Figur 5 dargestellt, mit der Bodenplatte 111 befestigt wird. Auch hier können zur Befestigung der zentralen Grundplatte 118 Montageadapter 120 verwendet werden, die beidseitig an die Bodenplatte 111 geklebt sind und einen Bolzen tragen, der auf der dem Schaltschrank 113 zugewandten Seite absteht und über den die Grundplatte 118 verschraubt werden kann. Der Schaltschrank 113 selbst wird über dessen erste Befestigungspunkte 115 an die Tragarme 117 montiert, wobei letztere korrespondierende Befestigungspunkte 115a haben. Die Tragarme 117 sind optional federnd ausgebildet.

Dadurch ist die eingangs erwähnte Entkopplung der Befestigungspunkte bei der Bodenplattenbefestigung und der Schaltschrankbefestigung erreicht. Insbesondere in den Bereichen der ersten Befestigungspunkte 115 ist zwischen dem Schaltschrank 113 und der Bodenplatte 111 ein Freiraum 121 beziehungsweise Spalt ausgebildet. Die zweiten Befestigungspunkte 119 sind in einem deutlich geringeren Abstand zueinander angeordnet als die ersten Befestigungspunkte 115. Im Ausführungsbeispiel definieren die zweiten Befestigungspunkte 119 ein zweites Vieleck, welches im Ausführungsbeispiel quadratisch ist. Benachbarte zweite Befestigungspunkte 119 beziehungsweise Ecken des zweiten Vielecks haben einen zweiten Abstand a2 zueinander.

Der zweite Abstand a2, insb. ein geringster zweiter Abstand a2 aller zweiten Abstände a2, ist deutlich geringer als ein geringster erster Abstand a1 (aller ersten Abstände a1) der ersten Befestigungspunkte 115 (s. Figur 3). Insbesondere ist ein geringster zweiter Abstand a2 geringer als ein mittlerer erster Abstand der ersten Abstände a1 benachbarter erster Befestigungspunkte 115 zueinander, wie in Figur 3 gezeigt. Auch die beiden Flächen A1 und A2 der beiden definierten Vielecke sind hinsichtlich ihrer Größen deutlich unterschiedlich (s. Figur 4). Insbesondere ist die Fläche des zweiten Vielecks um mehr als 50% geringer als die des ersten Vielecks.

Darüber hinaus liegen die zweiten Befestigungspunkte 119, projiziert in eine durch die ersten Befestigungspunkte 115 aufgespannte Ebene, innerhalb des durch die ersten Befestigungspunkte 115 gebildeten ersten Vielecks. Eine derartige Ausgestaltung ermöglicht die eingangs genannten Vorteile und Funktionen.

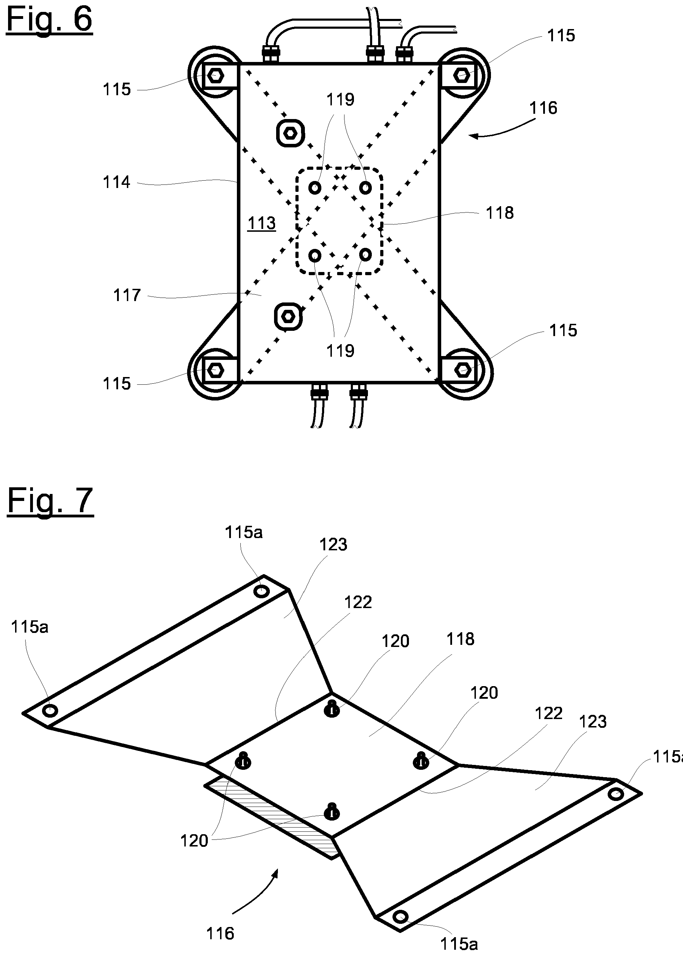

Figur 6 zeigt in einer schematischen Ansicht den Schaltschrank 113, der an die Halterung 116 montiert ist.

Figur 7 zeigt eine alternative Ausgestaltung der Halterung 116, die im Ausführungsbeispiel gemäß Figur 7 eine Konsole ist. Auch diese Halterung 116 zeichnet sich durch eine Grundplatte 118 aus, von der sich an gegenüberliegenden Rändern 122 jeweils zwei Flügel 123 erstrecken. Die Flügel haben Befestigungspunkte 115a, die zu den ersten Befestigungspunkten 115 des Schaltschranks 113 korrespondieren, in denen die beiden Elemente miteinander mechanisch verbunden werden.

Optional sind die beiden Flügel 123 federnd, insb. bezüglich der Grundplatte 118, ausgebildet. Beispielsweise stehen die Flügel 123 unter einem Winkel bezogen auf die Haupterstreckungsebene der Grundplatte 118 von letzterer ab.

Wie in der Schnittdarstellung in Figur 5 erkennbar, kann die Halterung 116 Dämpfer 126 aufweisen. Beispielsweise sind im montierten Zustand zwischen der Halterung 116 und dem Schaltschrank 113 im Bereich der ersten Befestigungspunkte 115 ein oder mehrere Dämpferelemente montiert. Zusätzlich oder alternativ sind zwischen der Grundplatte 118 und der Bodenplatte 111 ein oder mehrere Dämpferelemente angeordnet.

### Bezugszeichenliste

- 100: Windenergieanlage
- 101: Turm
- 102: Gondel
- 103: Rotor
- 104: Rotorblatt
- 105: Rotornabe
- 106: Rotorblattwurzelbereich
- 107: Übergangsbereich
- 108: Profilbereich
- 109: Druckseite
- 110: Saugseite
- 111: Bodenplatte
- 112: Innenwand
- 113: Schaltschrank
- 114: Gehäuse
- 115: erster Befestigungspunkt
- 115a: korrespondierender Befestigungspunkt
- 116: Halterung
- 117: Tragarm
- 118: Grundplatte
- 119: zweiter Befestigungspunkt
- 120: Montageadapter
- 121: Freiraum
- 122: Rand
- 123: Flügel
- 124: Hauptströmungsrichtung
- 125: Längserstreckungsrichtung
- 126: Dämpfer
- a1: erster Abstand
- a2: zweiter Abstand
- A1: Fläche erstes Vieleck
- A2: Fläche zweites Vieleck

## Patentansprüche

1. Rotorblatt (104) für eine Windenergieanlage (100), aufweisend
- einen Rotorblattwurzelbereich (106);
- eine Bodenplatte (111), die fest innerhalb des Rotorblattwurzelbereichs (106) mit einer Innenwand (112) des Rotorblatts (104) verbunden ist;
- einen Schaltschrank (113), der mehrere erste Befestigungspunkte (115) aufweist; und **gekennzeichnet durch**
- eine Halterung (116), die einen oder mehrere zweite Befestigungspunkte (119) aufweist, an denen die Halterung (116) an der Bodenplatte (111) festgelegt ist, und an der mittels der ersten Befestigungspunkte (115) der Schaltschrank (113) befestigt ist, wobei der oder die zweiten Befestigungspunkte (119) der Halterung (116) - projiziert in eine durch die ersten Befestigungspunkte (115) aufgespannte Ebene - innerhalb eines durch die ersten Befestigungspunkte (115) gebildeten ersten Vielecks liegen.

2. Rotorblatt (104) nach Anspruch 1, wobei die Halterung (116) zumindest zwei zweite Befestigungspunkte (119) aufweist, wobei ein geringster erster Abstand (a1) zwischen benachbarten Ecken des ersten Vielecks größer ist als ein geringster zweiter Abstand (a2) zwischen den beiden zweiten Befestigungspunkten (119).

3. Rotorblatt (104) nach Anspruch 1 oder 2, wobei die Halterung (116) drei oder mehr zweite Befestigungspunkte (119) aufweist, die ein zweites Vieleck definieren, wobei eine Fläche (A1) des ersten Vielecks um mindestens 50% größer ist als eine Fläche (A2) des zweiten Vielecks.

4. Rotorblatt (104) nach einem der vorhergehenden Ansprüche, wobei die Halterung (116) als Tragwerk ausgebildet ist.

5. Rotorblatt (104) nach Anspruch 4, wobei die Halterung (116) eine Grundplatte (118) mit dem einen oder den mehreren zweiten Befestigungspunkten (119) hat, wobei sich von der Grundplatte (118) ein oder mehrere Tragarme (117) erstrecken, an denen der Schaltschrank (113) jeweils über einen zum ersten Befestigungspunkt (115) korrespondierenden Befestigungspunkt (115a) befestigt ist.

6. Rotorblatt (104) nach einem der Ansprüche 1 bis 3, wobei die Halterung (116) als Konsole ausgebildet ist.

7. Rotorblatt (104) nach Anspruch 6, wobei die Halterung (116) eine Grundplatte (118) mit dem einen oder den mehreren zweiten Befestigungspunkten (119) hat, wobei sich an gegenüberliegenden Rändern der Grundplatte (122) von der Grundplatte (118) jeweils ein Flügel (123) erstreckt, an dem der Schaltschrank (113) jeweils über einen oder mehrere erste Befestigungspunkte (115) befestigt ist.

8. Rotorblatt (104) nach einem der vorhergehenden Ansprüche, wobei der Schaltschrank (113) in den ersten Befestigungspunkten (115) mit der Halterung (116) verschweißt und/oder verschraubt ist.

9. Rotorblatt (104) nach einem der vorhergehenden Ansprüche, wobei die Halterung (116) zumindest teilweise federnd ausgebildet ist.

10. Rotorblatt (104) nach einem der vorhergehenden Ansprüche, wobei die Halterung (116) ein oder mehrere Dämpfungselemente (126) aufweist.

11. Rotorblatt (104) nach einem der vorhergehenden Ansprüche, wobei zwischen dem Schaltschrank (113) und der Bodenplatte (111) zumindest im Bereich der ersten Befestigungspunkte (115) ein Freiraum oder Spalt (121) ausgebildet ist.

12. Windenergieanlage (100), aufweisend
einen Rotor (103) mit einem oder mehreren Rotorblättern nach einem der vorhergehenden Ansprüche.

## Claims

1. A rotor blade (104) for a wind turbine (100), comprising
- a rotor blade root area (106);
- a base plate (111) fixedly connected to an inner wall (112) of the rotor blade (104) within the rotor blade root area (106) ;
- a switch cabinet (113) having a plurality of first attachment points (115); and
- a holder (116) which has one or more second attachment points (119) at which the holder (116) is fixed to the base plate (111) and to which the switch cabinet (113) is attached by means of the first attachment points (115), wherein the one or more second attachment points (119) of the holder (116) - projected in a plane defined by the first attachment points (115) - lie within a first polygon formed by the first attachment points (115).

2. A rotor blade (104) according to claim 1, wherein the holder (116) has at least two second attachment points (119), wherein a minimum first distance (a1) between adjacent corners of the first polygon is larger than a minimum second distance (a2) between the two second attachment points (119).

3. A rotor blade (104) according to claim 1 or 2, wherein the holder (116) has three or more second attachment points (119) defining a second polygon, wherein an area (A1) of the first polygon is at least 50% larger than an area (A2) of the second polygon.

4. A rotor blade (104) according to anyone of the preceding claims, wherein the holder (116) is formed as a supporting structure.

5. A rotor blade (104) according to claim 4, wherein the holder (116) has a base plate (118) with the one or more second attachment points (119), wherein one or more support arms (117) extend from the base plate (118), to which support arms (117) the switch cabinet (113) is attached, each via an attachment point (115a) corresponding to the first attachment point (115).

6. A rotor blade (104) according to one of claims 1 to 3, wherein the holder (116) is designed as a console.

7. A rotor blade (104) according to claim 6, wherein the holder (116) has a base plate (118) with the one or more second attachment points (119), wherein at opposite edges of the base plate (122) a respective wing (123) extends from the base plate (118), to which wing the switch cabinet (113) is attached via one or more first attachment points (115) respectively.

8. A rotor blade (104) according to one of the preceding claims, wherein the switch cabinet (113) is welded and/or bolted to the holder (116) at the first attachment points (115).

9. A rotor blade (104) according to one of the preceding claims, wherein the holder (116) is at least partially resilient.

10. A rotor blade (104) according to one of the preceding claims, wherein the holder (116) has one or more damping elements (126).

11. A rotor blade (104) according to one of the preceding claims, wherein a free space or gap (121) is formed between the switch cabinet (113) and the base plate (111) at least in the region of the first attachment points (115).

12. A wind turbine (100), comprising
a rotor (103) with one or more rotor blades according to anyone of the preceding claims.

## Revendications

1. Pale de rotor (104) pour une éolienne (100), présentant
- une zone de racine de pale de rotor (106) ;
- une plaque de fond (111) qui est fermement reliée à une paroi intérieure (112) de la pale de rotor (104) à l'intérieur de la zone de racine de pale de rotor (106) ;
- une armoire électrique (113) qui présente plusieurs premiers points de fixation (115) ; et **caractérisée par**
- une fixation (116) qui présente un ou plusieurs deuxièmes points de fixation (119) au niveau desquels la fixation (116) est attachée au niveau de la plaque de fond (111), et au niveau de laquelle l'armoire électrique (113) est fixée moyennant les premiers points de fixation (115), sachant que le ou les deuxièmes points de fixation (119) de la fixation (116) - projetés dans un plan tendu par les premiers points de fixation (115) - sont situés à l'intérieur d'un premier polygone formé par les premiers points de fixation (115).

2. Pale de rotor (104) selon la revendication 1, sachant que la fixation (116) présente au moins deux deuxièmes points de fixation (119), sachant qu'un premier écart (a1) minimal entre des angles adjacents du premier polygone est plus grand qu'un deuxième écart (a2) minimal entre les deux deuxièmes points de fixation (119).

3. Pale de rotor (104) selon la revendication 1 ou 2, sachant que la fixation (116) présente trois ou plus de trois deuxièmes points de fixation (119) qui définissent un deuxième polygone, sachant qu'une aire (A1) du premier polygone est plus grand d'au moins 50 % qu'une aire (A2) du deuxième polygone.

4. Pale de rotor (104) selon l'une des revendications précédentes, sachant que la fixation (116) est constituée comme ossature porteuse.

5. Pale de rotor (104) selon la revendication 4, sachant que la fixation (116) comporte une plaque de base (118) avec l'un ou les plusieurs deuxièmes points de fixation (119), sachant qu'un ou plusieurs bras porteurs (117) au niveau desquels l'armoire électrique (113) est fixée respectivement via un point de fixation (115a) correspondant au premier point de fixation (115) s'étendent depuis la plaque de base (118).

6. Pale de rotor (104) selon l'une des revendications 1 à 3, sachant que la fixation (116) est constituée comme console.

7. Pale de rotor (104) selon la revendication 6, sachant que la fixation (116) comporte une plaque de base (118) avec l'un ou les plusieurs deuxièmes points de fixation (119), sachant que respectivement une aile (123) au niveau de laquelle l'armoire électrique (113) est fixée respectivement via un ou plusieurs premiers points de fixation (115) s'étend depuis la plaque de base (118) au niveau de bords opposés de la plaque de base (122).

8. Pale de rotor (104) selon l'une des revendications précédentes, sachant que l'armoire électrique (113) est soudée et/ou vissée à la fixation (116) dans les premiers points de fixation (115).

9. Pale de rotor (104) selon l'une des revendications précédentes, sachant que la fixation (116) est constituée au moins en partie de manière élastique.

10. Pale de rotor (104) selon l'une des revendications précédentes, sachant que la fixation (116) présente un ou plusieurs éléments d'amortissement (126).

11. Pale de rotor (104) selon l'une des revendications précédentes, sachant qu'un espace libre ou une fente (121) est constituée entre l'armoire électrique (113) et la plaque de fond (111), du moins dans la zone des premiers points de fixation (115).

12. Éolienne (100), présentant
un rotor (103) comportant une ou plusieurs pales de rotor selon l'une des revendications précédentes.
